# EUROPEAN PATENT APPLICATION

(11) **EP 0 613 086 A2**
(43) Date of publication of application: **31.08.1994**
(21) Application number: 94300984.5
(22) Date of filing: 10.02.1994
(51) Int. Cl.: G06F 9/46

(54) **Method and apparatus for interprocess communications**

(30) Priority: 26.02.1993 US 23644
(71) Applicant: INTERNATIONAL BUSINESS MACHINES CORPORATION, Armonk, N.Y. 10504 (US)
(72) Inventor: Ardent, James Wendell, Round Rock, Texas 78681 (US); Manikundalam, Ravindranath Kasinath, Austin, Texas 78728 (US); Phelan, James Michael, Austin, Texas 78731 (US)
(74) Representative: Lloyd, Richard Graham

(57) **Abstract**

An apparatus for and method of managing interprocess communications including apparatus for and step of receiving a request for activating a common destination identifier to designate a destination process for a plurality of source processes, apparatus for and step of determining whether any of the source processes currently utilizes the destination identifier to designate a different destination process, and apparatus for and step of activating the destination identifier in memory for the source processes while allowing other source processes to utilize the destination identifier to designate different destination processes. In addition, apparatus for and method of managing interprocess communications including apparatus for and step of receiving a request to reserve a destination identifier to designate a destination process for at least one source process, apparatus for and step of reserving the destination identifier in memory to designate the destination process for the source processes if the source processes do not currently utilize the destination identifier to designate a different destination process, apparatus for and step of receiving a request.to activate the reserved destination identifier to designate the destination process for the source processes, and apparatus for and step of activating the destination identifier if the destination identifier is reserved in memory for the source processes.

## Description

The present invention relates generally to interprocess communications in computers and more specifically to reserving and activating destination identifiers for such interprocess communications.

Operating systems such as UNIX (registered trademark of Unix Systems Laboratories, Inc.) have recently been implemented as application systems with a small kernel providing memory management and communication functions. One example of such a kernel is the Mach kernel developed by Carnegie Mellon University as described in "Unix as an Application Program", USENIX Summer Conference, June 11-15, 1990, pages 87-95. This modularization provides for faster interprocess communications and also standardizes the application interface among multiple operating systems.

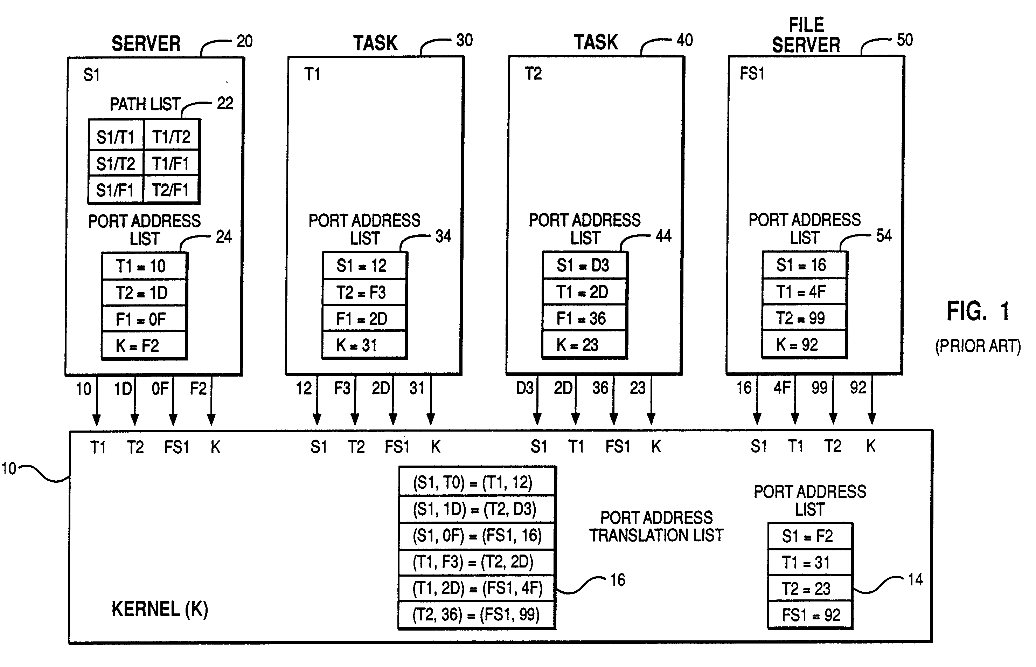

Figure 1 is an illustration of current techniques for using the Mach kernel to handle communications between multiple processes. In the illustrated example, a kernel 10 provides communications between a server S1 20, a task T1 30, a task T2 40, and a file server FS1 50. The server may be an operating system such as Unix. The tasks may be application programs such as spreadsheets or word processing. The file server is a memory management program for accessing data in memory as needed.

Server S1 includes a path list 22 that lists all paths between processes that were enabled by the server. Each of the processes and the kernel includes a port address list 14, 24, 34, 44, and 54. A port address is an identifier that identifies the destination process of a communication and may also be referred to as a destination identifier. Each port address list includes 32 bit port addresses, shown in hexadecimal with a range of 00 to FF, which are used by each process to access other processes across paths enabled by the server. The kernel also includes a port address translation list 16 to provide communications between the processes.

For example, if task T1 wishes to send a message to task T2, then T1 will read its port address list to determine that task T2 may be reached using port address (destination identifier) F3. Process T1 then sends the message to kernel 10 using port address F3. The kernel then utilizes the port address translation list 16 to determine that the message from process T1 on port F3 is to be passed to process T2 using port address 2D. The kernel then sends the message to process T2 using port address 2D. Process T2 then receives the communication on port 2D for processing.

It is an attribute of this example that a port address used by task T1 may be the same as the port address used by task T2, yet the port addresses refer to different paths. For example, task T1 uses port address 2D to send a message to file FS1 and task T2 uses port address 2D to send a message to task T1. The port translation list in the kernel is used to handle these redundances. As result, the list of port addresses used by one process are not limited by the port addresses used by another process, thereby providing for greater flexibility.

In the art, task T1 may also send a message to task T2 regarding a third process such as file server FS1. However, to do so would require a translation of the port address referred to with regards to FS1. This translation is accomplished by the kernel. Task T1 would send a message to task T2 using port address F3 with a indicator in a header of the message requesting the kernel to translate the message. The message would include a referral to file server FS1 on port address 2D. The kernel would then review the message and determine, using the port address translation list, that the port address for file server FS1 for task T2 is 36. The kernel would then modify the message accordingly and pass it to task T2 using port address 2D. However, this translation process is time consuming and negatively impacts the performance of the data processing system.

The present invention provides an apparatus for and method of managing interprocess communications including apparatus for and step of receiving a request for activating a common destination identifier to designate a destination process for a plurality of source processes, apparatus for and step of determining whether any of the source processes currently utilizes the destination identifier to designate a different destination process, and apparatus for and step of activating the destination identifier in memory for the source processes while allowing other source processes to utilize the destination identifier to designate different destination processes. In addition, the present invention provides an apparatus for and method of managing interprocess communications including apparatus for and step of receiving a request to reserve a destination identifier to designate a destination process for at least one source process, apparatus for and step of reserving the destination identifier in memory to designate the destination process for the source processes if the source processes do not currently utilize the destination identifier to designate a different destination process, apparatus for and step of receiving a request to activate the reserved destination identifier to designate the destination process for the source processes, and apparatus for and step of activating the destination identifier if the destination identifier is reserved in memory for the source processes.

An embodiment of the invention will now be described by way of example only, with reference to the accompanying drawings, wherein:
Figure 1 is a block diagram of a prior art system that utilizes a kernel to handle interprocess communications between applications;
Figure 2 is a block diagram of a typical digital computer utilized by a preferred embodiment of the invention;
Figure 3 is a block diagram of data processing system that utilizes a kernel to handle interprocess communications between applications;
Figure 4 is a flowchart illustrating the process of reserving a port address according to the preferred embodiment of the invention;
Figure 5 is a block diagram illustrating the port address reservation and activation system of Figure 3 after the port address reservation of Figure 4 is completed;
Figure 6 is a flowchart illustrating the process of activating or allocating a port address according to the preferred embodiment of the invention;
Figure 7 is a block diagram illustrating the port address reservation and allocation system of Figure 5 after the port address allocation process described with reference to Figure 6 is completed; and
Figures 8A-8C are block diagrams of various messages used for communications between the processes and the kernel.

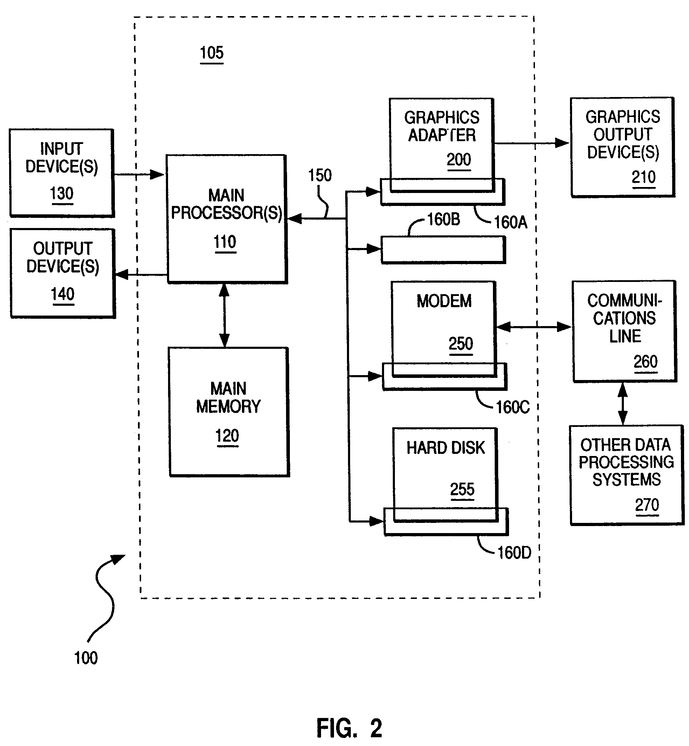

Figure 2 is a block diagram of a typical digital computer 100. The computer includes main processor(s) 110 coupled to a main memory 120 in computer box 105 with input device(s) 130 and output device(s) 140 attached. Main processor(s) 110 may include a single processor or multiple processors. Input device(s) 130 may include a keyboard, mouse, tablet or other types of input devices. Output device(s) 140 may include a text monitor, plotter or other types of output devices. The main processor may also be coupled to graphics output device(s) 210 such as a graphics display through a graphics adapter 200. Graphics adapter 200 may be located in an adapter slot 160A. Graphics adapter 200 receives instructions regarding graphics from main processor 110 on bus 150, thereby rendering the desired graphics output from the main processor. A modem or other communications adapter 250 and a hard disk 255 may also be located in slots 160C and 160D to provide communications with main processor 110 across bus 150. Modem 250 may communicate with other data processing systems 270 across communications line 260.

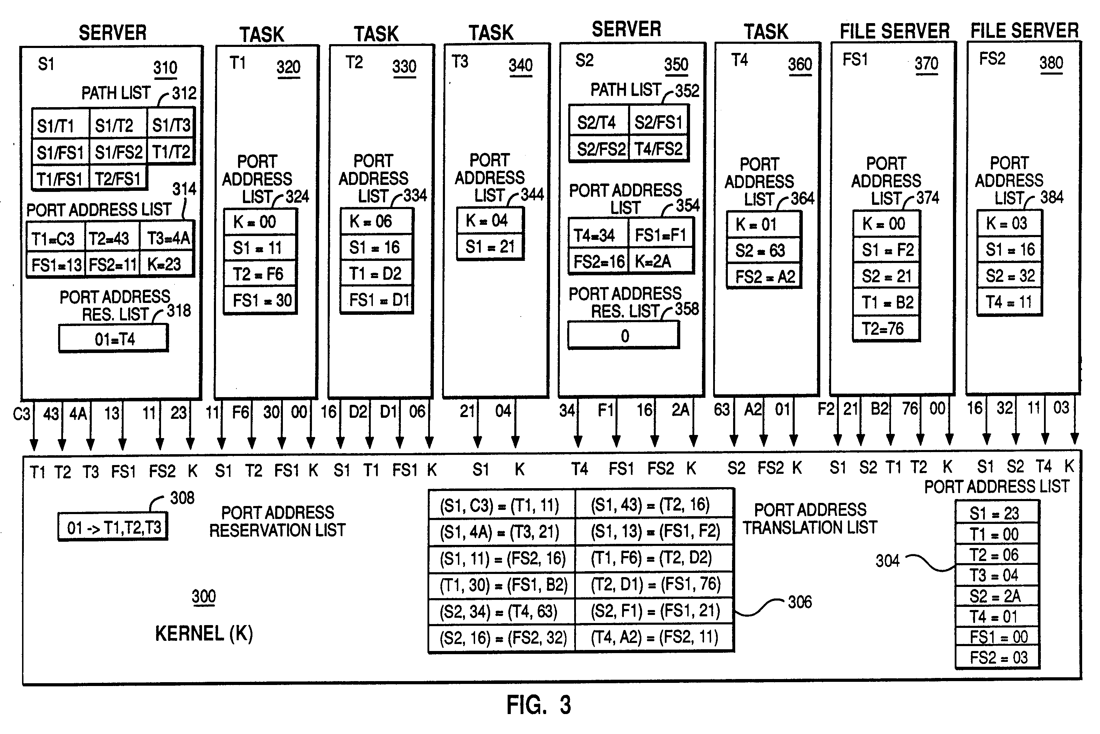

Figure 3 is a block diagram illustrating a port address reservation and activation system according to a preferred embodiment of the invention. In the preferred embodiment, a kernel 300 provides communication between a first server S1 310, a task T1 320, a task T2 330, a task T3 340, a second server S2 350, a task T4 360, a file server FS1 370, and a file server FS2 380. The servers may be an operating system such as Unix and OS/2 (a trademark of International Business Machines Corp.). Each server may have children tasks that were initialized by the server. In the present example, server S1 has children tasks T1, T2 and T3 where T3 is not fully initialized and server S2 has children task T4. The tasks may be application programs such as spreadsheets or word processing. The file server is a memory management program for accessing data in memory as needed. The file servers may be initialized by a master server during system boot.

Servers S1 and S2 include path lists 312 and 352 that list all paths between processes or tasks that were enabled by the server. Each of the processes and the kernel include a port address list 304, 314, 324, 334, 344, 354, 364, 374, and 384. Port addresses may also be referred to as destination identifiers. Each port address list includes 32 bit port addresses, shown in hexadecimal with a range of 00 to FF, which are used by the process to access other processes across paths enabled by the servers. The kernel includes a port address translation list 306 to provide communication between the processes. The port address lists, path list and port address translation list are used to activate communication paths between processes. The activation process may also be referred to as an allocation process herein. The lists are shown as tables for illustrative purposes but are preferably hashed linked lists for improving access speed to the lists. In other embodiments, hash tables may be utilized. The communication paths between the kernel and the processes are shown as port addresses although other types of communication links may be utilized.

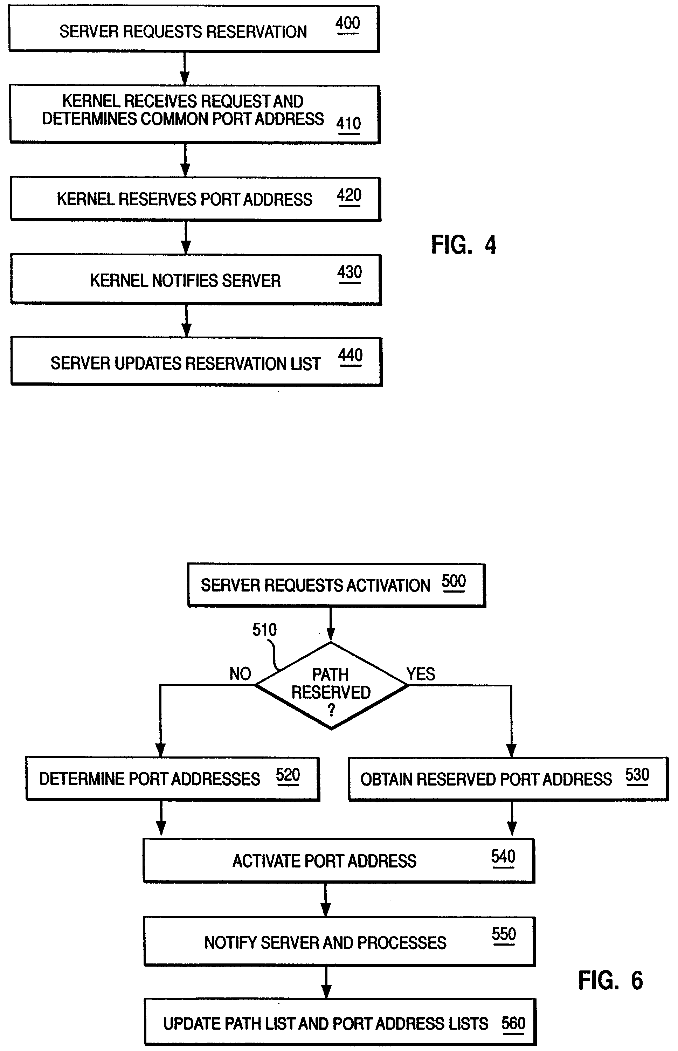

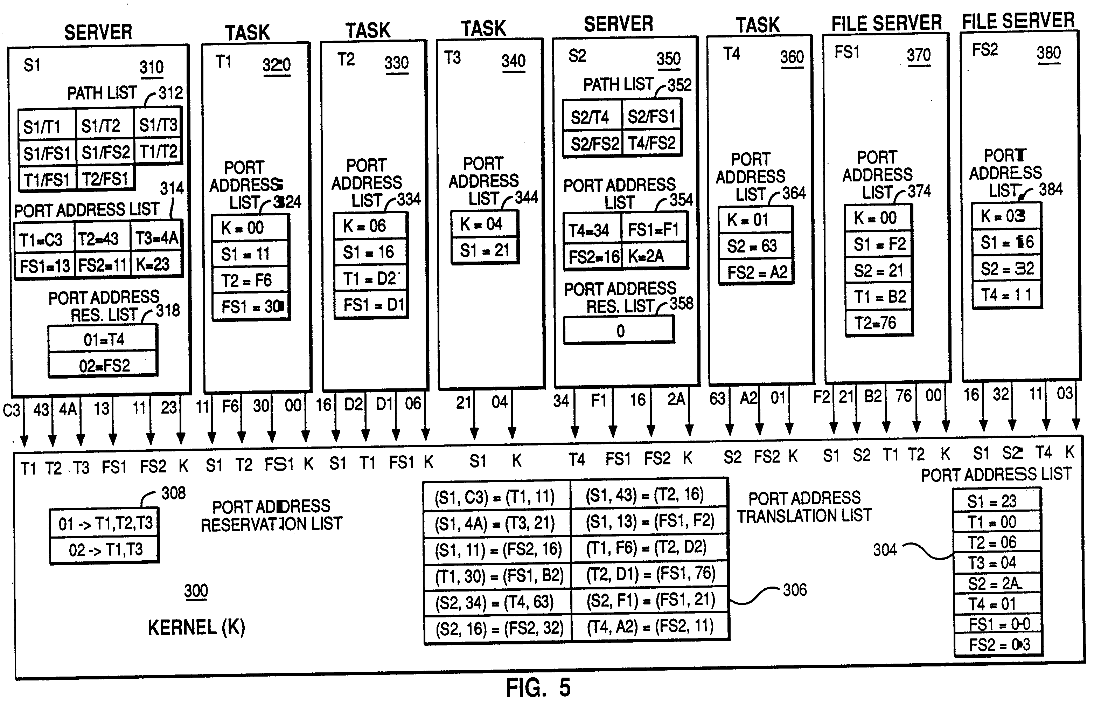

Servers S1 and 52 include port address reservation lists 318 and 358, where port address reservation list 358 is currently empty, and the kernel includes a port address reservation list 308. The reservation lists are shown as tables for illustrative purposes but are preferably hashed linked lists for improving access speed to the lists. The port address reservation lists are utilized to reserve port addresses for common use across processes. This port reservation capability would then allow processes to allocate common port addresses, thereby enabling the processes to communicate with each other regarding third party processes without requiring the kernel to provide translations of interprocess communications. In the present example, server S1 has already reserved the use of port address 01 for tasks T1, T2 and T3 to communicate with task T4. Since the port address has not been allocated with additional entries to the port address lists and the port address translation list, there is no added overhead or speed degradation to interprocess communications. The reservation process will now be described with reference to Figures 4 and 5.

Figure 4 is a flowchart illustrating the process of reserving a port address according to the preferred embodiment of the invention. Figure 5 is a block diagram illustrating the port address reservation and allocation system of Figure 3 after the port address reservation process described with reference to Figure 4 is completed.

Port addresses are typically reserved when the server is in the process of initializing a new process or task such as task T3. In the present example, task T3 is being initialized by server S1, communication paths with the kernel and the server have already been established, and port address 01 has already been reserved for common use with tasks T1, T2 and T3. In step 400, server S1 sends a message to the kernel across port address 23 requesting the kernel reserve a common port address for the tasks T1 and T3 for access to file server FS2. In the present example, the server has not requested task T2, one of it's children, be one of the tasks included in the reservation. In the preferred embodiment, the server may request reservations for any set of processes, including processes that are not its children, such as task T4 in the present example. However, security is maintained because server S1 cannot request a reservation for task T4 without first obtaining the port address of T4 from its parent server S2. In the preferred embodiment, the servers are normally the processes that may request a reservation. However, other processes such as tasks may also request port addresses be reserved.

In step 410, the kernel receives the request and reads the port translation list to obtain port addresses not currently in use by either tasks T1 or T3. In the preferred embodiment, the kernel will attempt to use the lowest port address available.

In step 420, the kernel then reserves port address 02 to tasks T1 and T3 by storing those parameters in the port address reservation list 308. In step 430, the kernel then sends a message across port address 23 to server S1 notifying the server of the reservation. In step 440, server S1 then places the reserved port address in port address reservation list 316. In the preferred embodiment of the invention, the server also places the desired objects of this communications such as file server FS2 in the port reservation list.

Although the example was given illustrating the reservation of a single port address, multiple port addresses may be reserved at the same time. In the preferred embodiment, a contiguous range of port addresses may be reserved at the same time by the server requesting a desired number of addresses and the kernel reserving a range of port addresses.

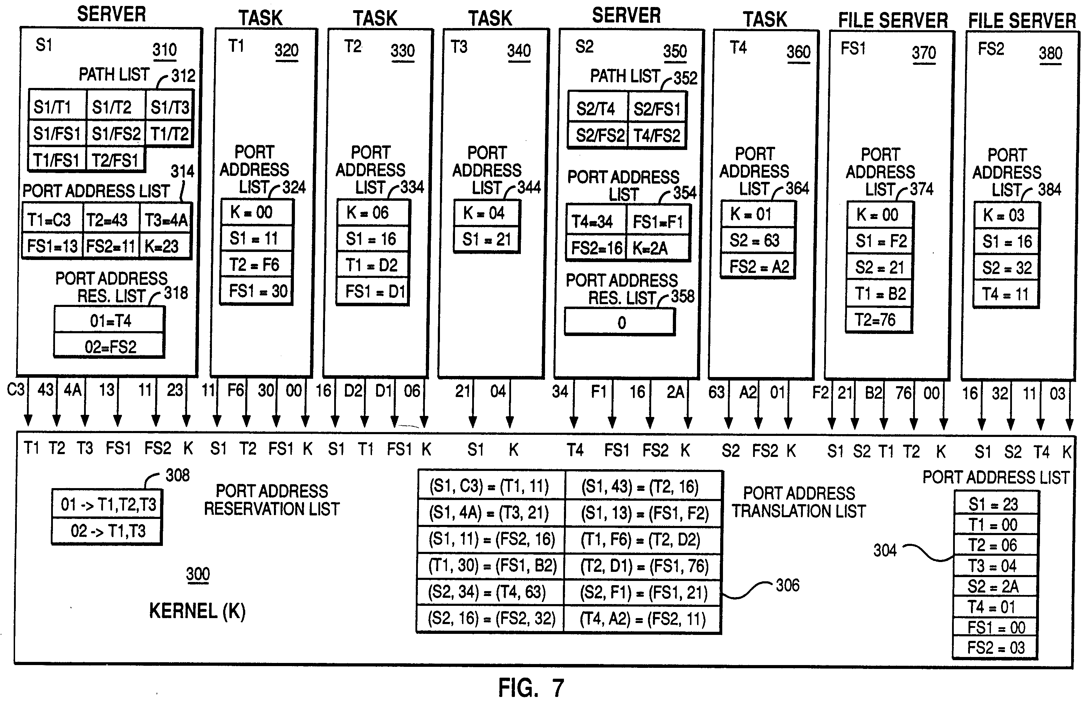

Figure 6 is a flowchart illustrating the process of activating a port address according to the preferred embodiment of the invention. In step 500, a server such as server S1 sends a request to the kernel that a communication path be established between two processes such as task T3 and file server FS2. In step 510, the kernel received the request and determines whether a port address was previously reserved for this communication path. For example, with reference to Figure 5, the port address 02 was reserved for communication path between T3 and file server FS2. If no, then in step 520, the kernel reviews the port address translation table and selects a port addresses for establishing a communication path between the requested two processes. If a port address was reserved for the requested communication path, then in step 530 the kernel obtains the reserved port address for the requested communication path and also reviews the port address translation table to select a port address for any portion of the communication path not reserved. For example, port address 02 has been reserved for task T3 to communicate with file server FS2. However, no port address has been reserved for file server FS2 to communicate with task T3. As a result, a port address such as 99 may be activated (allocated) for file server FS2 to communicate with task T3. In step 540, the kernel then activates the communication path between the two processes by loading the process names and port addresses into the port address translation list. In step 550, the kernel then transmits the paths to the server and to the processes for appropriate updating, in step 560, of the server path list and the process port address list. In an alternative embodiment, the server may specify a port address to be allocated. If so, then in steps 520 and 530, the kernel will determine whether the port address conflicts with a previously reserved or allocated port address for that communication path. The kernel may also provide an alternative port address should there be a conflict.

Figure 7 is a block diagram illustrating the port address reservation and allocation system of Figure 5 after the port address allocation process described with reference to Figure 6 is completed. In the preferred embodiment, the port address reservation lists are not modified after a reserved port address has been allocated. This is due to the fact that an allocated port address may be subsequently deallocated, thereby allowing the possibility of a port address being misallocated later if the port address were not maintained on the reservation lists. Alternative embodiments may allow removal from the reservation lists if the port addresses are either put back on the reservation list if deallocation occurs or if other alternatives resolving this issue are utilized. Since, in the preferred embodiment, the reservation list is not modified by subsequent allocations, port addresses may be deallocated in a process similar to the reservation process to remove stale or unnecessary reservations.

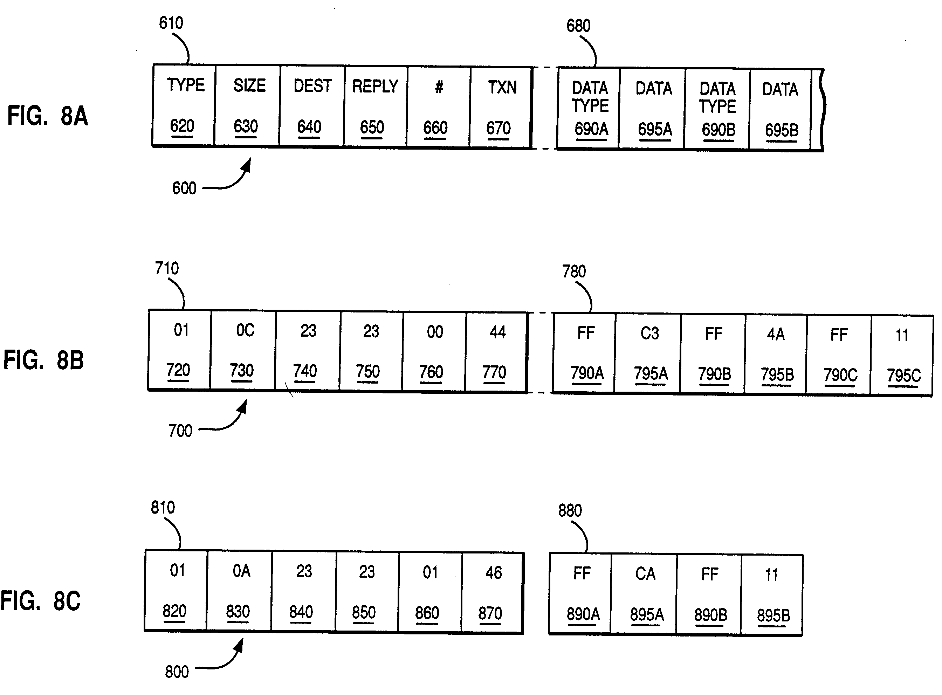

Figures 8A-8C are block diagrams of various messages used for communications between the processes and the kernel as described above. Messages are preferably built by the processes in memory and then pointers regarding the message are passed between the processes and the kernel. Fig. 8A is a block diagram of a generic message according to the preferred embodiment of the invention. A message 600 includes a fixed length header 610 and a variable length trailer 680. The header preferably includes a message type 620, a message size 630, a destination port address 640, a reply port address 650, a message number 660, and a message transaction type 670. Message type 620 is an indicator specifying the type or class of message. For example, the message type indicates whether this is a message that impacts port addresses or whether the message needs to be translated due to a reference to a third party process if there is not a common port address between the source and destination processes. Of course, there are potentially many other types of messages. Message size 630 provides the length of the message, preferably in bytes. Destination port address 640 provides the port address of the desired destination process as known by the source process. Reply port address 650 provides the port address of the process to which a reply should be sent as known by the source process. Message number 660 is a sequential number applied to the message for use in tracking or handling conflicts regarding the message. Message transaction type 670 provides the type of transaction or instruction that is included in the message such as whether the message is for port allocation, port reservation, etc. Trailer 680 includes the message data. In the preferred embodiment, the message data is provided in pairs of information. That is, each data item 695A, 695B, etc. is preceded by a data type 690A, 690B, etc. The data type provides a description of the type of data to follow such as whether the data is a port address, a raw byte of information, etc.

Figure 8B is a block diagram of a message sent from server S1 to the kernel to reserve a common port address for tasks T1 and T3 for communications with file server FS2 as described in Figure 4 above. Message 700 includes a header 710 and a trailer 780. Header 710 includes a message type 720 indicating that the message type impacts port addresses. Message size 730 indicates that the message is OC (twelve in hexadecimal) bytes long. Message destination port address 740 with a value of 23 (the port address of the kernel for server S1) indicates that message is being sent to the kernel. Message reply port address 750 with a value of 23 (the port address of server S1 for the kernel) indicates that a reply should be sent to server S1. Message number 760 has a value 00 indicating that this the first message. Message transaction type 770 indicates that the transaction is a port address reservation request. Trailer 780 includes data types 790A, 790B and 790C indicating that the three pieces of data are all port addresses. The data 795A, 795B and 795C are the port addresses for tasks T1 and T2 and file server FS2 as known by server S1.

Figure 8C is a block diagram of a message sent from server S1 to the kernel to allocate a common port address for task T1 for communications with file server FS2 as described in Figure 6 above. Message 800 includes a header 810 and a trailer 880. Header 810 includes a message type 820 indicating that the message type impacts port addresses. Message size 830 indicates that the message is A0 (ten in hexadecimal) bytes long. Message destination port address 840 with a value of 23 (the port address of the kernel for server S1) indicates that message is being sent to the kernel. Message reply port address 850 with a value of 23 (the port address of server S1 for the kernel) indicates that a reply should be sent to server S1. Message number 860 has a value 01 indicating that this the second message. Message transaction type 870 indicates that the transaction is a port address allocation request. Trailer 880 includes data types 890A and 890B indicating that the two pieces of data are all port addresses. The data 895A and 895B are the port addresses for task T1 and file server FS2 as known by server S1.

In conclusion, the present invention provides a reservation and activation system that provides the capability of interprocess communications without requiring translations. The reservation system has the advantage of allowing destination identifiers, also known as port addresses, to be rapidly activated. This allows the system to more quickly provide dynamic communication links with less overhead.

Although the present invention has been fully described above with reference to specific embodiments, other alternative embodiments will be apparent to those of ordinary skill in the art. Therefore, the above description should not be taken as limiting the scope of the present invention which is defined by the appended claims.

## Claims

1. Apparatus for managing interprocess communications in a data processing system, the apparatus comprising:
a) means for receiving a request for activating a common destination identifier to designate a destination process for a plurality of source processes;
b) means for determining whether any of the source processes currently utilizes the destination identifier to designate a different destination process; and
c) means for activating the destination identifier in memory for the source processes while allowing other source processes to utilize the destination identifier to designate different destination processes.

2. Apparatus as claimed in Claim 1 wherein the means for determining includes means for accessing memory to determine whether the destination identifier is currently activated for the source processes.

3. Apparatus as claimed in Claim 2 further comprising:
a) means for receiving a request to reserve a destination identifier to designate a destination process for at least one source process; and
b) means for reserving the destination identifier to designate the destination process for the source processes if the source processes do not currently utilize the destination identifier to designate a different destination process.

4. Apparatus as claimed in Claim 3 wherein the means for activating includes means for activating the destination identifier if the destination identifier is reserved for the source processes.

5. A method for managing interprocess communications in a data processing system comprising the steps of:
a) receiving a request for activating a common destination identifier to designate a destination process for a plurality of source processes;
b) determining whether any of the source processes currently utilizes the destination identifier to designate a different destination process; and
c) activating the destination identifier in memory for the source processes while allowing other source processes to utilize the destination identifier to designate different destination processes.

6. A method as claimed in Claim 5 wherein the step of determining includes accessing memory to determine whether the destination identifier is currently activated for the source processes.

7. A method as claimed in Claim 6 further comprising the steps of:
a) receiving a request to reserve a destination identifier to designate a destination process for at least one source process; and
b) reserving the destination identifier to designate the destination process for the source processes if the source processes do not currently utilize the destination identifier to designate a different destination process.

8. A method as claimed in Claim 7 wherein the step of activating includes activating the destination identifier if the destination identifier is reserved for the source processes.

9. Apparatus for managing interprocess communications comprising:
a) means for receiving a request to reserve a destination identifier to designate a destination process for at least one source process;
b) means for reserving the destination identifier in memory to designate the destination process for the source processes if the source processes do not currently utilize the destination identifier to designate a different destination process;
c) means for receiving a request to activate the reserved destination identifier to designate the destination process for the source processes; and
d) means for activating the destination identifier if the destination identifier is reserved in memory for the source processes.

10. Apparatus as claimed in Claim 9 wherein the means for activating includes means for activating the destination identifier to designate the destination process for the source processes if the source processes do not currently utilize the destination identifier to designate a different destination process.

11. Apparatus as claimed in Claim 10 further comprising:
a) means for receiving a message from one of the source processes including the destination identifier; and
b) means for forwarding the received message to the designated process if the destination identifier has been activated for the source processes.

12. Apparatus as claimed in Claim 11 wherein the means for reserving includes means for reserving the destination identifier to designate the destination process for the source processes while allowing other source processes to utilize the destination identifier to designate different destination processes.

13. Apparatus as claimed in Claim 12 wherein the means for activating includes means for activating the destination identifier to designate the destination process for the source processes while allowing other source processes to utilize the destination identifier to designate different destination processes.

14. A method of managing interprocess communications comprising the steps of:
a) receiving a request to reserve a destination identifier to designate a destination process for at least one source process;
b) reserving the destination identifier in memory to designate the destination process for the source processes if the source processes do not currently utilize the destination identifier to designate a different destination process;
c) receiving a request to activate the reserved destination identifier to designate the destination process for the source processes; and
d) activating the destination identifier if the destination identifier is reserved in memory for the source processes.

15. A method as claimed in Claim 14 wherein the step of activating includes activating the destination identifier to designate the destination process for the source processes if the source processes do not currently utilize the destination identifier to designate a different destination process.

16. A method as claimed in Claim 15 further comprising the steps of:
a) receiving a message from one of the source processes including the destination identifier; and
b) forwarding the received message to the designated process if the destination identifier has been activated for the source processes.

17. A method as claimed in Claim 16 wherein the step of reserving includes reserving the destination identifier to designate the destination process for the source processes while allowing other source processes to utilize the destination identifier to designate different destination processes.

18. A method as claimed Claim 17 wherein the step of activating includes activating the destination identifier to designate the destination process for the source processes while allowing other source processes to utilize the destination identifier to designate different destination processes.
